# EUROPEAN PATENT SPECIFICATION

(11) **EP 2 835 333 B1**
(45) Date of publication and mention of the grant of the patent: **27.09.2017**
(21) Application number: 12871241.1
(22) Date of filing: 13.03.2012
(51) Int. Cl.: B66B 1/24

(54) **ELEVATOR GROUP MANAGEMENT CONTROL DEVICE**
STEUERUNGSVORRICHTUNG ZUR VERWALTUNG EINER AUFZUGSGRUPPE
DISPOSITIF DE COMMANDE DE GESTION DE GROUPE D'ASCENSEURS

(43) Date of publication of application: 11.02.2015
(73) Proprietor: Mitsubishi Electric Corporation, Tokyo 100-8310 (JP)
(72) Inventor: KOBA, Yoshimasa, Tokyo 100-8310 (JP); SUZUKI, Naohiko, Tokyo 100-8310 (JP)
(74) Representative: Hoffmann Eitle
(86) International application number: PCT/JP2012/056389
(87) International publication number: WO 2013/136435

(56) References cited:
- WO-A1-2006/009542
- JP-A- 2002 087 713
- JP-A- 2007 223 764
- JP-A- 2007 223 764
- JP-A- 2009 057 197

## Description

### Technical Field

The present invention relates to an elevator group management control device.

### Background Art

A plurality of elevators are installed in a building where there are many elevator users and the like. These elevators are controlled in terms of group management. As a result, the operation efficiency of all of the plurality of elevators is improved.

A group management control device in which a plurality of elevators are put on standby in a distributed manner has been proposed. According to this group management control device, even when a hall call occurs in any place within a building, it is possible to respond to the hall call quickly (refer to Patent Literature 1 and Patent Literature 2, for example).

Furthermore, there has been proposed a one-shaft multicar system elevator in which a plurality of cars are installed in a shaft for reasons of the site area of a building. In this elevator, it is possible to increase the transportation volume of longitudinal traffic in the building (refer to Patent Literature 3, for example).

### Citation List

### Patent Literature

Patent Literature 1: Japanese Patent Laid-Open No. 2007-284180
Patent Literature 2: International Publication No. WO2010/137118
Patent Literature 3: International Publication No. WO2006/025103

### Summary of Invention

### Technical Problem

However, in Patent Literatures 1 to 3, no consideration is given to what standby action should be carried out when the services of a one-shaft multicar system elevator have been completed.

Document JP 2009 057197 teaches an elevator group supervisory control device. A building may be divided into a plurality of floor zones e.g. floors 1 - 10, 11 - 20 and 21 - 30. A demand forecast table stores demand per floor zone and time period. For this, input from surveillance cameras placed on each floor and a clock is used by a demand calculation device. Based on the demand forecasting table, a car waiting table is derived.

The present invention was made in order to solve the above-described problem and the object of the present invention is to provide an elevator group management control device capable of appropriately setting standby actions to be carried out when services of a one-shaft multicar system elevator have been completed.

### Means for Solving the Problems

This object is achieved by the subject-matter of the independent claims 1 to 3. Advantageous embodiments are discussed in the dependent claims. An exemplary elevator group management control device includes a determination section which, for a plurality of elevators including a one-shaft multicar system elevator in which a plurality of cars are arranged in a same shaft, determines whether services to elevator calls have been completed and an instruction section in which, in a case where services of a plurality of cars of a one-shaft multicar system elevator have been completed, as floors at which a plurality of cars in question are each put on standby, any of patterns is set among a first pattern in which a main floor in a vicinity of a bottom floor and a floor lower than the main floor are set, a second pattern in which the main floor and an upper floor are set, and a third pattern in which upper floors are set.

### Advantageous Effect of Invention

According to the present invention, it is possible to appropriately set standby actions to be carried out when services of a one-shaft multicar system elevator have been completed.

### Brief Description of the Drawings

Figure 1 is a block diagram of elevators controlled by an elevator group management control device in Embodiment 1 of the present invention.
Figure 2 is a diagram to explain elevators put on standby in a distributed manner by the elevator group management control device in Embodiment 1 of the present invention.
Figure 3 is a flowchart to explain the distributed standby processing by the group management control device in Embodiment 1 of the present invention.
Figure 4 is a diagram to explain elevators which are on standby in a distributed manner by the elevator group management control device in Embodiment 2 of the present invention.
Figure 5 is a flowchart to explain the distributed standby processing by the elevator group management control device in Embodiment 2 of the present invention.
Figure 6 is a diagram to explain elevators which are on standby in a distributed manner by the elevator group management control device in Embodiment 3 of the present invention.
Figure 7 is a flowchart to explain the distributed standby processing by the elevator group management control device in Embodiment 3 of the present invention.

### Description of Embodiments

Embodiments for carrying out the present invention will be described with reference to the accompanying drawings. In each of the drawings, identical numerals refer to identical or corresponding parts and overlaps of description of these parts are appropriately simplified or omitted.

### Embodiment 1

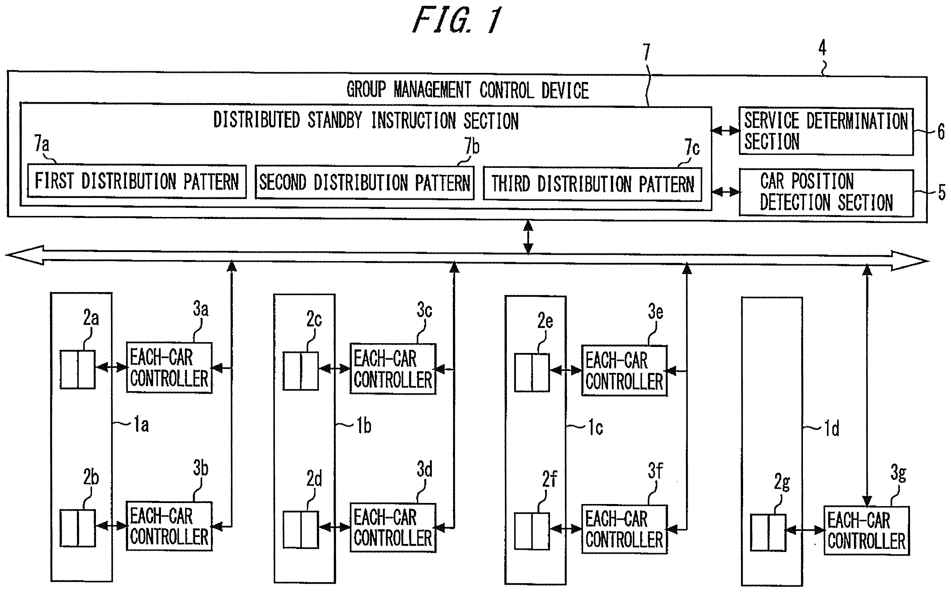

Figure 1 is a block diagram of elevators controlled by an elevator group management control device in Embodiment 1 of the present invention.

In Figure 1, reference numerals 1a to 1c denote shafts of one-shaft multicar system elevators. Reference numeral 1d denotes a shaft of a one-shaft single-car system elevator. The shafts 1a to 1d are provided adjacent to each other in the same building.

In the shaft 1a, two cars 2a, 2b are arranged in line in the vertical direction. In the shaft 1b, two cars 2c, 2d are arranged in line in the vertical direction. In the shaft 1c, two cars 2e, 2f are arranged in line in the vertical direction. In the shaft 1d, one car 2g is arranged.

Each-car controllers 3a to 3g are connected to each of the cars 2a to 2g, respectively. Each of the each-car controllers 3a to 3g is connected to the group management control device 4. The group management control device 4 is provided with a car position detection section 5, a service determination section 6, and a distributed standby instruction section 7.

The car position detection section 5 has a function of detecting the positions of each of the cars 2a to 2g. The service determination section 6 has a function of whether services to hall calls and car calls have been completed for each of the elevators. The distributed standby instruction section 7 has a function of putting elevators whose services have been completed on standby in a distributed manner. As settings for putting the elevators on standby in a distributed manner, a first distribution pattern 7a, a second distribution pattern 7b, and a third distribution pattern 7c are stored in the distributed standby instruction section 7.

The first distribution pattern 7a is such that in a one-shaft multicar system elevator, a main floor in the vicinity of a bottom floor and a floor lower than the main floor are set as floors at which a plurality of cars in the same shaft are each put on standby. For example, the main floor is the first floor.

The second distribution pattern 7b is such that in a one-shaft multicar system elevator, a main floor and an upper floor are set as floors at which a plurality of cars in the same shaft are each put on standby. For example, the upper floor is a top floor.

The third distribution pattern 7c is such that in a one-shaft multicar system elevator, upper floors are set as floors at which a plurality of cars in the same shaft are each put on standby. For example, the upper floors are a top floor and a floor in the vicinity of the top floor.

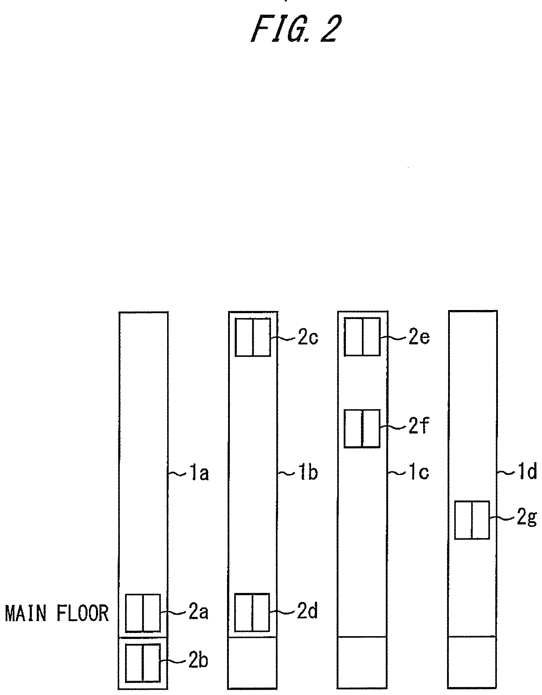

Next, elevators put on standby in a distributed manner will be described with the aid of Figure 2.

Figure 2 is a diagram to explain elevators put on standby in a distributed manner by the elevator group management control device in Embodiment 1 of the present invention.

As shown in Figure 2, the cars 2a, 2b of the shaft 1a are on standby by the first distribution pattern 7a. The cars 2c, 2d of the shaft 1b are on standby by the second distribution pattern 7b. The cars 2e, 2f of the shaft 1c are on standby by the third distribution pattern 7c. The car 2g of the shaft 1d is on standby at an intermediate floor. The intermediate floor is set at a floor at a location almost the same distance away from both of the main floor and the top floor.

When a hall call for a movement from a lower floor such as the main floor to an upper floor such as the top floor is registered, the car 2a of the shaft 1a responds. In this case, a user arrives at the upper floor without changing the car 2a.

In contrast to this, when a hall call for a movement from an upper floor such as the top floor to a lower floor such as the main floor is registered, the car 2c of the shaft 1b responds. In this case, the car 2d of the shaft 1b can retreat by moving a short distance to a floor lower than the main floor. In this case, a user arrives at the lower floor without changing the car 2c.

When a hall call for a movement from a lower floor such as the main floor to an intermediate floor is registered, the car 2d of the shaft 1b responds. In this case, a user arrives at the intermediate floor without changing the car 2d.

When a hall call for a movement from an intermediate floor to a lower floor such as the main floor is registered, the car 2f of the shaft 1c or the car 2g of the shaft 1d responds. In this case, a user arrives at the lower floor without changing the car 2f or the car 2g.

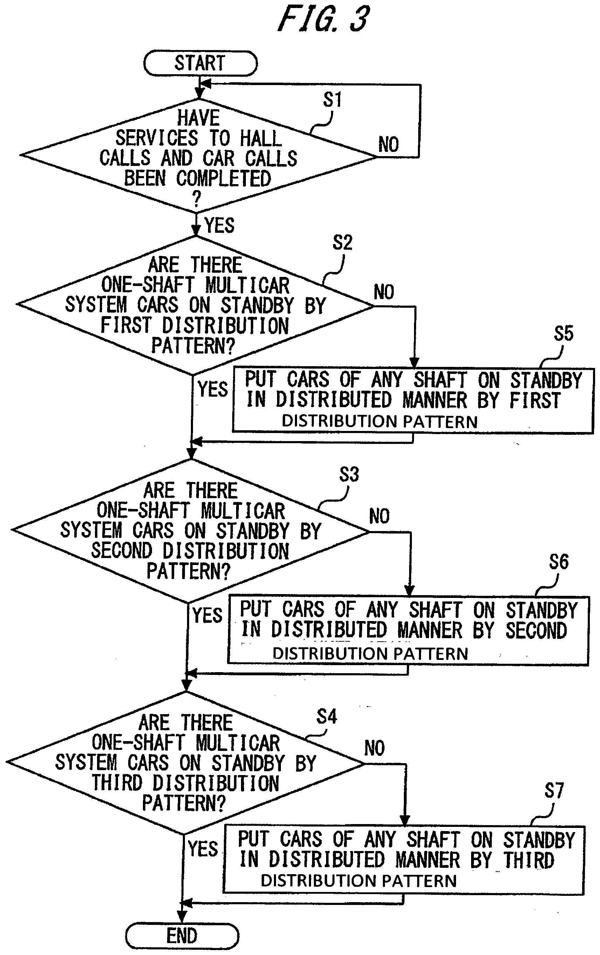

Next, the distributed standby processing by the group management control device 4 will be described with the aid of Figure 3.

Figure 3 is a flowchart to explain the distributed standby processing by the group management control device in Embodiment 1 of the present invention.

In Step S1, the service determination section 6 determines whether services to hall calls and car calls have been completed. In the case where the services have not been completed, Step S1 is repeated. In the case where the services have been completed, the flow of processing proceeds to Step S2.

In Step S2, on the basis of information from the car position detection section 5, the distributed standby instruction section 7 determines whether there is a shaft having cars on standby by the first distribution pattern 7a among one-shaft multicar system elevators. In the case where there is a shaft in question, the flow of processing proceeds to Step S3.

In Step S3, on the basis of information from the car position detection section 5, the distributed standby instruction section 7 determines whether there is a shaft having cars on standby by the second distribution pattern 7b among one-shaft multicar system elevators. In the case where there is a shaft in question, the flow of processing proceeds to Step S4.

In Step S4, on the basis of information from the car position detection section 5, the distributed standby instruction section 7 determines whether there is a shaft having cars on standby by the third distribution pattern 7c among one-shaft multicar system elevators. In the case where there is a shaft in question, this processing is finished.

In the case where in Step S2 there is no shaft having cars on standby by the first distribution pattern 7a, the flow of processing proceeds to Step S5. In Step S5, the distributed standby instruction section 7 outputs instructions to put, for example, the cars 2a, 2b of the shaft 1a on standby by the first distribution pattern 7a to the each-car controllers 3a, 3b.

On the basis of the instructions in question the each-car controller 3b causes the car 2b to move to a floor lower than the main floor. On the basis of the instructions in question the each-car controller 3a causes the car 2a to move to the main floor. After that, the processing of Step S3 and beyond is performed.

In the case where in Step S3 there is no shaft having cars on standby by the second distribution pattern 7b, the flow of processing proceeds to Step S6. In Step S6, the distributed standby instruction section 7 puts cars other than the cars 2a, 2b, which are on standby in a distributed manner by the first distribution pattern 7a, on standby in a distributed manner by the second distribution pattern 7b. For example, the distributed standby instruction section 7 outputs instructions to put the cars 2c, 2d of the shaft 1b on standby by the second distribution pattern 7b to the each-car controllers 3c, 3d.

On the basis of the instructions in question the each-car controller 3d causes the car 2d to move to the main floor. On the basis of the instructions in question the each-car controller 3c causes the car 2c to move to an upper floor. After that, the processing of Step S4 and beyond is performed.

In the case where in Step S4 there is no shaft having cars on standby by the third distribution pattern 7c, the flow of processing proceeds to Step S7. In Step S7, the distributed standby instruction section 7 puts cars other than the cars 2a to 2d, which are on standby in a distributed manner by the first distribution pattern 7a or the second distribution pattern 7b, on standby in a distributed manner by the third distribution pattern 7c. For example, the distributed standby instruction section 7 outputs instructions to put the cars 2e, 2f of the shaft 1c on standby by the third distribution pattern 7c to the each-car controllers 3e, 3f.

On the basis of the instructions in question the each-car controller 3e causes the car 2e to move to an upper floor. On the basis of the instructions in question the each-car controller 3f causes the car 2f to move to an upper floor. After that, this processing is finished.

According to Embodiment 1 described above, the first distribution pattern 7a, the second distribution pattern 7b, and the third distribution pattern 7c are set as floors at which cars of a one-shaft multicar system elevator are put on standby. For example, in the case where a call for a movement from a lower floor to an upper floor was registered, this call is assigned to the car 2a which is on standby at the main floor by the first distribution pattern 7a. In contrast to this, in the case where a call for a movement from an upper floor to a lower floor was registered, this call is assigned to the car 2c which is on standby at an upper floor by the second distribution pattern. For this reason, even when a hall call occurs in any place within a building, it is possible to respond to the hall call quickly. As a result, the transportation efficiency and convenience of elevators are improved.

### Embodiment 2

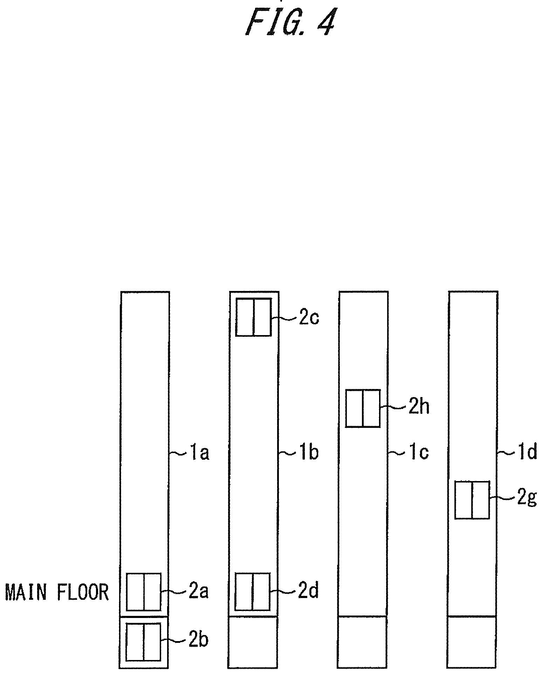

Figure 4 is a diagram to explain elevators which are on standby in a distributed manner by the elevator group management control device in Embodiment 2 of the present invention. Identical numerals refer to identical or corresponding parts in Embodiment 1 and overlaps of description of these parts are omitted.

In Embodiment 1, in the shaft 1c the two cars 2e, 2f are arranged in line in the vertical direction. On the other hand, in Embodiment 2, one car 2h is arranged in the shaft 1c.

In this case, the cars 2a, 2b of the shaft 1a are on standby by the first distribution pattern 7a. The cars 2c, 2d of the shaft 1b are on standby by the second distribution pattern 7b. The car 2g of the shaft 1d is on standby at an intermediate floor. The car 2h of the shaft 1c is on standby at a floor between an intermediate floor and a top floor.

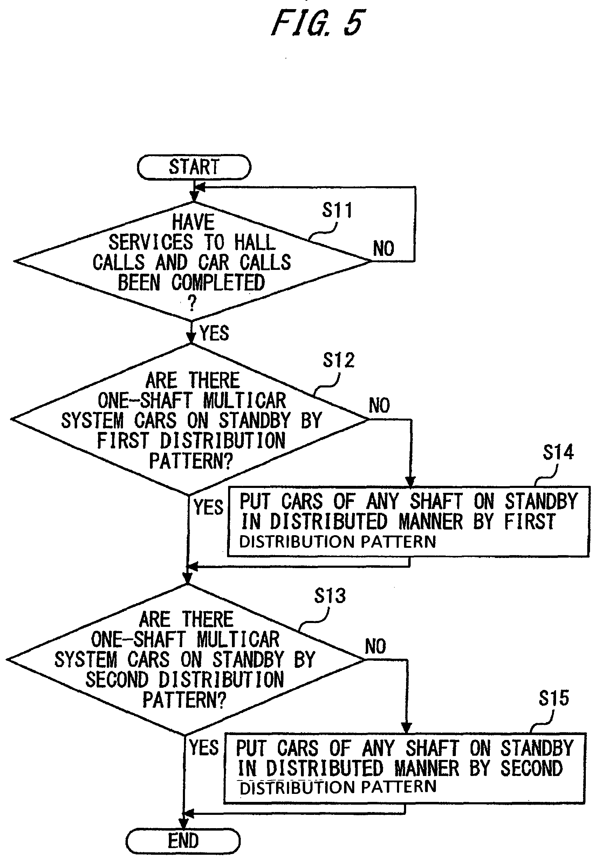

Next, the distributed standby processing by the group management control device will be described with the aid of Figure 5.

Figure 5 is a flowchart to explain the distributed standby processing by the elevator group management control device 4 in Embodiment 2 of the present invention.

In Step S11, the service determination section 6 determines whether services to hall calls and car calls have been completed. In the case where the services in question have not been completed, Step S11 is repeated. In the case where the services in question have been completed, the flow of processing proceeds to Step S12.

In Step S12, the distributed standby instruction section 7 determines whether there is a shaft having cars on standby by the first distribution pattern 7a among one-shaft multicar system elevators. In the case where there is a shaft in question, the flow of processing proceeds to Step S13.

In Step S13, the distributed standby instruction section 7 determines whether there is a shaft having cars on standby by the second distribution pattern 7b among one-shaft multicar system elevators. In the case where there is a shaft in question, this processing is finished.

In the case where in Step S12 there is no shaft having cars on standby by the first distribution pattern 7a, the flow of processing proceeds to Step S 14. In Step S14, the distributed standby instruction section 7 outputs instructions to put, for example, the cars 2a, 2b of the shaft 1a on standby by the first distribution pattern 7a to the each-car controllers 3a, 3b.

On the basis of the instructions in question the each-car controller 3b causes the car 2b to move to a floor lower than the main floor. On the basis of the instructions in question the each-car controller 3a causes the car 2a to move to the main floor. After that, the processing of Step S13 and beyond is performed.

In the case where in Step S13 there is no shaft having cars on standby by the second distribution pattern 7b, the flow of processing proceeds to Step S15. In Step S15, the distributed standby instruction section 7 puts cars other than the cars 2a, 2b, which are on standby in a distributed manner by the first distribution pattern 7a, on standby in a distributed manner by the second distribution pattern 7b. For example, the distributed standby instruction section 7 outputs instructions to put the cars 2c, 2d of the shaft 1b on standby by the second distribution pattern 7b to the each-car controllers 3c, 3d.

On the basis of the instructions in question the each-car controller 3d causes the car 2d to move to the main floor. On the basis of the instructions in question the each-car controller 3c causes the car 2c to move to an upper floor. After that, this processing is finished.

According to Embodiment 2 described above, even in the case where there are only two one-shaft multicar system elevators, the cars 2a, 2d are on standby at the main floor. In contrast to this, the car 2c is on standby at an upper floor. For this reason, even when a hall call occurs in any place within a building, it is possible to respond to the hall call quickly.

### Embodiment 3

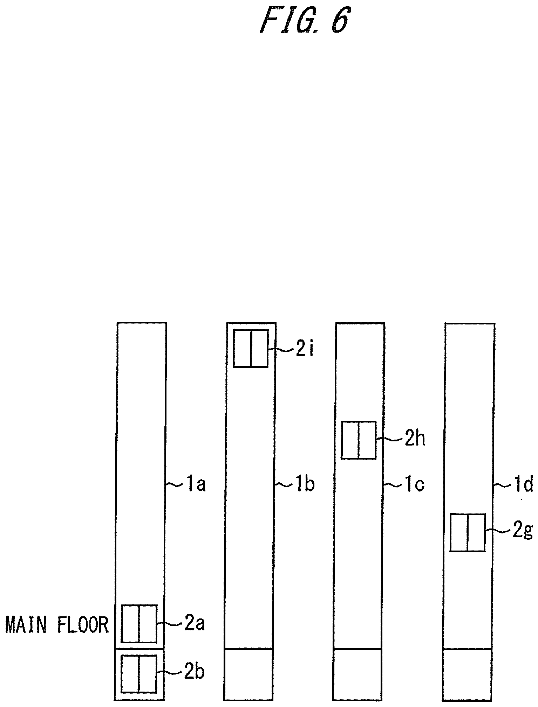

Figure 6 is a diagram to explain elevators which are on standby in a distributed manner by the elevator group management control device in Embodiment 3 of the present invention. Identical numerals refer to identical or corresponding parts in Embodiments 1 and 2 and overlaps of description of these parts are omitted.

In Embodiment 2, in the shaft 1b the two cars 2c, 2d are arranged in line in the vertical direction. On the other hand, in Embodiment 3, one car 2i is arranged in the shaft 1b.

In this case, the cars 2a, 2b of the shaft 1a are on standby by the first distribution pattern 7a. The car of the shaft 1d is on standby at an intermediate floor. The car 2h of the shaft 1c is on standby at a floor between an intermediate floor and a top floor. The car 2i of the shaft 1b is on standby at an upper floor. Specifically, the car 2i is on standby at a top floor.

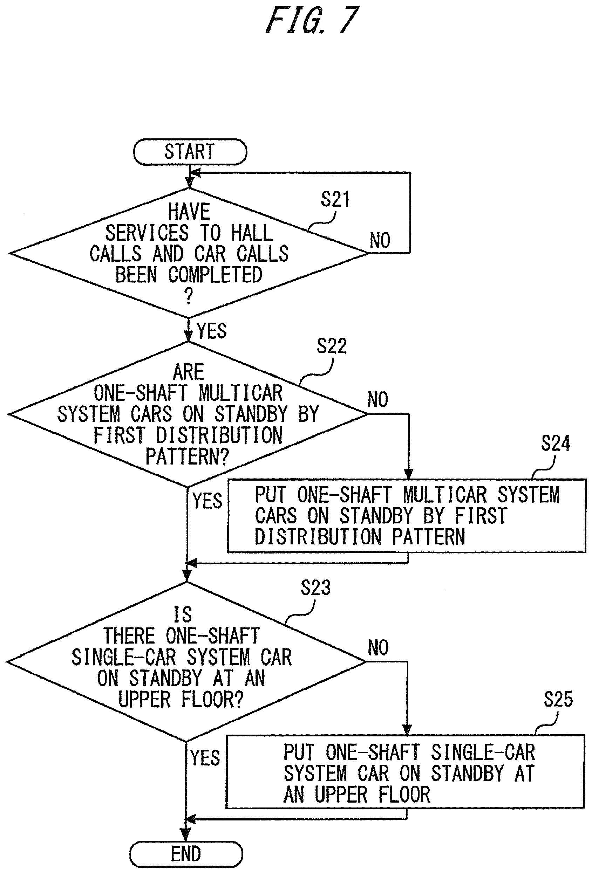

Next, actions of the group management control device will be described with the aid of Figure 7.

Figure 7 is a flowchart to explain the distributed standby processing by the elevator group management control device in Embodiment 3 of the present invention.

In Step S21, the service determination section 6 determines whether services to hall calls and car calls have been completed. In the case where the services in question have not been completed, Step S21 is repeated. In the case where the services in question have been completed, the flow of processing proceeds to Step S22.

In Step S22, the distributed standby instruction section 7 determines whether the cars 2a, 2b of one-shaft multicar system elevator are on standby by the first distribution pattern 7a. In the case where the cars 2a, 2b of one-shaft multicar system elevator are on standby by the first distribution pattern 7a, the flow of processing proceeds to Step S23.

In Step S23, the distributed standby instruction section 7 determines whether there is a shaft having a car on standby at an upper floor among one-shaft single-car system elevators. In the case where there is a shaft having a car on standby at an upper floor, this process is finished.

In the case where in Step S22 the cars 2a, 2b of one-shaft multicar system elevator are not on standby by the first distribution pattern 7a, the flow of processing proceeds to Step S24. In Step S24, the distributed standby instruction section 7 outputs instructions to put the cars 2a, 2b of one-shaft multicar system elevator on standby by the first distribution pattern 7a to the each-car controllers 3a, 3b.

On the basis of the instructions in question the each-car controller 3b causes the car 2b to move to a floor lower than the main floor. On the basis of the instructions in question the each-car controller 3a causes the car 2a to move to the main floor. After that, the processing of Step S23 and beyond is performed.

In the case where in Step S23 there is no shaft having a car on standby at an upper floor, the flow of processing proceeds to Step S25. In Step S25, the distributed standby instruction section 7 outputs instructions to put, for example, the car 2i of the shaft 1b on standby at an upper floor to a corresponding each-car controller (not shown).

On the basis of the instructions in question the corresponding each-controller causes the car 2i to move to the upper floor. After that, this processing is finished.

According to Embodiment 3 described above, even in the case where there is only one one-shaft multicar system elevator, the car 2a is on standby at the main floor. In contrast to this, the car 2i is on standby at an upper floor. For this reason, even when a hall call occurs in any place within a building, it is possible to respond to the hall call quickly.

### Industrial Applicability

As described above, the elevator group management control device of the present invention can be used in an elevator which appropriately sets standby actions to be carried out when services of one-shaft multicar system elevators have been completed.

### Description of symbols

- 1a-1d: shaft
- 2a-2i: car
- 3a-3g: each-car controller
- 4: group management control device
- 5: car position detection section
- 6: service determination section
- 7: distributed standby instruction section
- 7a: first distribution pattern
- 7b: second distribution pattern
- 7c: third distribution pattern

## Claims

1. An elevator group management control device (4), comprising:
a determination section (6) which, for a plurality of elevators including a one-shaft multicar system elevator in which a plurality of cars (2a to 2f) are arranged in a same shaft (1a to 1c), determines whether services to elevator calls have been completed; and
an instruction section (7) in which, in a case where services of a plurality of cars (2a to 2f) of a one-shaft multicar system elevator have been completed, as floors at which a plurality of cars (2a to 2f) in question are each put on standby, any of patterns is set among a first pattern in which a main floor in a vicinity of a bottom floor and a floor lower than the main floor are set, a second pattern in which the main floor and an upper floor are set, and a third pattern in which upper floors are set, **characterised in that** the instruction section (7) puts a plurality of cars (2a to 2f) of three one-shaft multicar system elevators on standby by the first pattern, the second pattern, and the third pattern, respectively.

2. An elevator group management control device (4), comprising;
a determination section (6) which, for a plurality of elevators including a one-shaft multicar system elevator in which a plurality of cars (2a to 2f) are arranged in a same shaft (1a to 1c), determines whether services to elevator calls have been completed; and
an instruction section (7) in which, in a case where services of a plurality of cars (2a to 2f) of a one-shaft multicar system elevator have been completed, as floors at which a plurality of cars (2a to 2f) in question are each put on standby, any of patterns is set among a first pattern in which a main floor in a vicinity of a bottom floor and a floor lower than the main floor are set, a second pattern in which the main floor and an upper floor are set, and a third pattern in which upper floors are set, **characterised in that** the instruction section (7) puts a plurality of cars (2a to 2d) of two one-shaft multicar system elevators on standby by the first pattern and the second pattern, respectively.

3. An elevator group management control device (4), comprising:
a determination section (6) which, for a plurality of elevators including a one-shaft multicar system elevator in which a plurality of cars (2a to 2f) are arranged in a same shaft (1a to 1c), determines whether services to elevator calls have been completed: and
an instruction section (7) in which, in a case where services of a plurality of cars (2a to 2f) of a one-shaft multicar system elevator have been completed, as floors at which a plurality of cars (2a to 2f) in question are each put on standby, any of patterns is set among a first pattern in which a main floor in a vicinity of a bottom floor and a floor lower than the main floor are set, a second pattern in which the main floor and an upper floor are set, and a third pattern in which upper floors are set, **characterised in that** the instruction section (7) puts a plurality of cars (2a, 2b) of a one-shaft multicar system elevator on standby by the first pattern, and puts a car (2i) of a one-shaft single-car system elevator on standby at the upper floor.

4. The elevator group management control device (4) according to any of claims 1 to 3, wherein the instruction section (7), upon registration of a call for a movement from a lower floor to a top floor, assigns the call to a car (2a) on standby at the main floor by the first pattern.

5. The elevator group management control device (4) according to claim 1 or 2, wherein the instruction section (7), upon registration of a call for a movement from a top floor to a lower floor, assigns the call to a car (2c) on standby at the top floor by the second pattern.

## Patentansprüche

1. Steuervorrichtung (4) zur Aufzugsgruppenverwaltung, umfassend:
einen Ermittlungsabschnitt (6), der für eine Vielzahl von Aufzügen, einschließlich eines Ein-Schacht-Mehrkabinensystem-Aufzugs, worin eine Vielzahl von Kabinen (2a bis 2f) in einem selben Schacht (1a bis 1c) angeordnet sind, ermittelt, ob Einsätze auf Aufzugrufe abgeschlossen worden sind; und
einen Anweisungsabschnitt (7), worin, dann, wenn Einsätze einer Vielzahl von Kabinen (2a bis 2f) eines Ein-Schacht-Mehrkabinensystem-Aufzugs abgeschlossen worden sind, als Etagen, auf denen eine Vielzahl von jeweiligen Kabinen (2a bis 2f) jede auf Standby gesetzt werden, gleich welches Muster eingestellt wird, ausgewählt aus einem ersten Muster, worin eine Hauptetage in der Nähe eines Erdgeschosses und eine niedriger als die Hauptetage befindliche Etage eingestellt werden, einem zweiten Muster, worin die Hauptetage und eine obere Etage eingestellt werden, und einem dritten Muster, worin obere Etagen eingestellt werden,
**dadurch gekennzeichnet, dass**
der Anweisungsabschnitt (7) eine Vielzahl von Kabinen (2a bis 2f) von drei Ein-Schacht-Mehrkabinensystem-Aufzügen nach dem ersten Muster, dem zweiten Muster beziehungsweise dem dritten Muster auf Standby setzt.

2. Steuervorrichtung (4) zur Aufzugsgruppenverwaltung, umfassend:
einen Ermittlungsabschnitt (6), der für eine Vielzahl von Aufzügen, einschließlich eines Ein-Schacht-Mehrkabinensystem-Aufzugs, worin eine Vielzahl von Kabinen (2a bis 2f) in einem selben Schacht (1a bis 1c) angeordnet sind, ermittelt, ob Einsätze auf Aufzugrufe abgeschlossen worden sind; und
einen Anweisungsabschnitt (7), worin, dann, wenn Einsätze einer Vielzahl von Kabinen (2a bis 2f) eines Ein-Schacht-Mehrkabinensystem-Aufzugs abgeschlossen worden sind, als Etagen, auf denen eine Vielzahl von jeweiligen Kabinen (2a bis 2f) jede auf Standby gesetzt werden, gleich welches Muster eingestellt wird, ausgewählt aus einem ersten Muster, worin eine Hauptetage in der Nähe eines Erdgeschosses und eine niedriger als die Hauptetage befindliche Etage eingestellt werden, einem zweiten Muster, worin die Hauptetage und eine obere Etage eingestellt werden, und einem dritten Muster, worin obere Etagen eingestellt werden,
**dadurch gekennzeichnet, dass**
der Anweisungsabschnitt (7) eine Vielzahl von Kabinen (2a bis 2d) von zwei Ein-Schacht-Mehrkabinensystem-Aufzügen nach dem ersten Muster beziehungsweise dem zweiten Muster auf Standby setzt.

3. Steuervorrichtung (4) zur Aufzugsgruppenverwaltung, umfassend:
einen Ermittlungsabschnitt (6), der für eine Vielzahl von Aufzügen, einschließlich eines Ein-Schacht-Mehrkabinensystem-Aufzugs, worin eine Vielzahl von Kabinen (2a bis 2f) in einem selben Schacht (1a bis 1c) angeordnet sind, ermittelt, ob Einsätze auf Aufzugrufe abgeschlossen worden sind; und
einen Anweisungsabschnitt (7), worin, dann, wenn Einsätze einer Vielzahl von Kabinen (2a bis 2f) eines Ein-Schacht-Mehrkabinensystem-Aufzugs abgeschlossen worden sind, als Etagen, auf denen eine Vielzahl von jeweiligen Kabinen (2a bis 2f) jede auf Standby gesetzt werden, gleich welches Muster eingestellt wird, ausgewählt aus einem ersten Muster, worin eine Hauptetage in der Nähe eines Erdgeschosses und eine niedriger als die Hauptetage befindliche Etage eingestellt werden, einem zweiten Muster, worin die Hauptetage und eine obere Etage eingestellt werden, und einem dritten Muster, worin obere Etagen eingestellt werden,
**dadurch gekennzeichnet, dass**
der Anweisungsabschnitt (7) eine Vielzahl von Kabinen (2a, 2b) eines Ein-Schacht-Mehrkabinensystem-Aufzugs nach dem ersten Muster auf Standby setzt und eine Kabine (2i) eines Ein-Schacht-Einzelkabinensystem-Aufzugs auf der oberen Etage auf Standby setzt.

4. Steuervorrichtung (4) zur Aufzugsgruppenverwaltung nach einem der Ansprüche 1 bis 3, wobei der Anweisungsabschnitt (7), bei Registrierung eines Rufs für eine Bewegung von einer unteren Etage zu einer obersten Etage, den Ruf einer Kabine (2a) auf Standby auf der Hauptetage nach dem ersten Muster zuweist.

5. Steuervorrichtung (4) zur Aufzugsgruppenverwaltung nach Anspruch 1 oder 2, wobei der Anweisungsabschnitt (7), bei Registrierung eines Rufs für eine Bewegung von einer obersten Etage zu einer unteren Etage, den Ruf einer Kabine (2c) auf Standby auf der obersten Etage nach dem zweiten Muster zuweist.

## Revendications

1. Dispositif de commande de gestion de groupe d'ascenseurs (4), comprenant :
une section de détermination (6) qui, pour une pluralité d'ascenseurs incluant un ascenseur de système multicabines à cage unique dans lequel une pluralité de cabines (2a à 2f) sont disposées dans une même cage (1a à 1c) détermine si les dessertes en réponse à des appels d'ascenseur ont été réalisées ; et
une section d'instruction (7) dans laquelle, dans le cas où des dessertes d'une pluralité de cabines (2a à 2f) d'un ascenseur de système multicabines à cage unique ont été réalisées, en tant qu'étages où une pluralité de cabines (2a à 2f) en question sont mises chacune en attente, l'une quelconque de configurations est établie parmi une première configuration dans laquelle un étage principal au voisinage d'un étage rez-de-chaussée et un étage inférieur à l'étage principal sont établis, une deuxième configuration dans laquelle l'étage principal et un étage supérieur sont établis et une troisième configuration dans laquelle des étages supérieurs sont établis,
**caractérisé en ce que** la section d'instruction (7) met une pluralité de cabines (2a à 2f) de trois ascenseurs de système multicabines à cage unique en attente respectivement selon la première configuration, la deuxième configuration, et la troisième configuration.

2. Dispositif de commande de gestion de groupe d'ascenseurs (4), comprenant :
une section de détermination (6) qui, pour une pluralité d'ascenseurs incluant un ascenseur de système multicabines à cage unique dans lequel une pluralité de cabines (2a à 2f) sont disposées dans une même cage (1a à 1e), détermine si les dessertes en réponse à des appels d'ascenseur ont été réalisées ; et
une section d'instruction (7) dans laquelle, dans le cas où les dessertes d'une pluralité de cabines (2a à 2f) d'un ascenseur de système multicabines à cage unique ont été réalisées, en tant qu'étages où une pluralité de cabines (2a à 2f) en question sont chacune mises en attente, l'une quelconque de configurations est établie parmi une première configuration dans laquelle un étage principal au voisinage d'un étage rez-de-chaussée et un étage inférieur à l'étage principal sont établis, une deuxième configuration dans laquelle l'étage principal et un étage supérieur sont établis et une troisième configuration dans laquelle des étages supérieurs sont établis,
**caractérisé en ce que** la section d'instruction (7) met en attente une pluralité de cabines (2a à 2d) de deux ascenseurs de système multicabines à cage unique respectivement selon la première configuration et selon la deuxième configuration.

3. Dispositif de commande de gestion de groupe d'ascenseurs (4), comprenant :
une section de détermination (6) qui, pour une pluralité d'ascenseurs incluant un ascenseur de système multicabines à cage unique dans lequel une pluralité de cabines (2a à 2f) sont disposées dans une même cage (1a à 1e), détermine si les dessertes en réponse à des appels d'ascenseur ont été réalisées; et
une section d'instruction (7) dans laquelle, dans le cas où les dessertes d'une pluralité de cabines (2a à 2f) d'un système multicabines à cage unique ont été réalisées, en tant qu'étages où une pluralité de cabines (2a à 2f) en question sont chacune mises en attente, l'une quelconque de configurations est établie parmi une première configuration dans laquelle un étage principal au voisinage d'un étage rez-de-chaussée et un étage inférieur à l'étage principal sont établis, une deuxième configuration dans laquelle l'étage principal et un étage supérieur sont établis et une troisième configuration dans laquelle des étages supérieurs sont établis,
**caractérisé en ce que** la section d'instruction (7) met une pluralité de cabines (2a, 2b) d'un ascenseur de système multicabines à cage unique en attente selon la première configuration, et met une cabine (2i) d'un ascenseur de système à cabine unique à cage unique en attente à l'étage supérieur.

4. Dispositif de commande de gestion de groupe d'ascenseurs (4) selon l'une quelconque des revendications 1 à 3, dans lequel la section d'instruction (7), lors de l'enregistrement d'un appel pour un déplacement depuis un étage inférieur vers un étage supérieur, attribue l'appel à une cabine (2a) en attente à l'étage principal selon la première configuration.

5. Dispositif de commande de gestion de groupe d'ascenseurs (4) selon la revendication 1 ou 2, dans lequel la section d'instruction (7), lors de l'enregistrement d'un appel pour un déplacement depuis un étage supérieur vers un étage inférieur, attribue l'appel à une cabine (2c) en attente à l'étage supérieur selon la deuxième configuration.
